# FASCICULE DE BREVET EUROPEEN

(11) **EP 4 013 986 B1**
(45) Date de publication et mention de la délivrance du brevet: **03.07.2024**
(21) Numéro de dépôt: 20754763.9
(22) Date de dépôt: 12.08.2020
(51) Int. Cl.: F16L 21/03, B28B 19/00, F16L 58/06, B32B 7/12

(54) **TUYAU, JONCTION TUBULAIRE ET PROCÉDÉ DE FABRICATION CORRESPONDANTS**
ROHR, ROHRVERBINDUNG UND ENTSPRECHENDES HERSTELLUNGSVERFAHREN
PIPE, TUBULAR JOINT AND CORRESPONDING MANUFACTURING METHOD

(30) Priorité: 14.08.2019 FR 1909214
(43) Date de publication de la demande: 22.06.2022
(60) Demande divisionnaire: 24179106.0
(73) Titulaire: Saint-Gobain Pam Canalisation, 54700 Pont-à-Mousson (FR)
(72) Inventeur: GENELOT, Pierre, 54700 Norroy-lès-Pont-à-Mousson (FR); GRASSER, Johan, 57000 Metz (FR); L'HUILLIER, Joël, 54610 Raucourt (FR); ROTHARMEL, Vincent, 54121 Vandières (FR); VOJENIS, Alain, 54820 Marbache (FR)
(74) Mandataire: Lavoix
(86) Numéro de dépôt international: PCT/EP2020/072658
(87) Numéro de publication internationale: WO 2021/028490

(56) Documents cités:
- FR-A5- 2 215 126
- US-A- 3 185 502
- US-A- 5 955 162

## Description

La présente invention concerne un tuyau, du type indiqué dans le préambule de la revendication 1 ainsi que son procédé de fabrication. 1. US5955162 décrit, en référence à sa Figure 2, un tuyau en fonte. FR2215126 décrit un tuyau en fonte comprenant un bout uni, un bout à emboitement et une partie courante cylindrique. US3185502 décrit un procédé de cimentation d'un tuyau destiné au forage pétrolier.

On connait des tuyaux en fonte qui sont munis intérieurement, le long de leur fût sensiblement cylindrique, d'un revêtement de mortier de ciment. Pour déposer ce revêtement dans le tuyau, on coule le mortier de ciment dans le tuyau en rotation. Afin d'empêcher l'écoulement axial du mortier en dehors du fût lors de la coulée du mortier et de la rotation du tuyau, la surface intérieure du fût est munie au préalable, à chaque extrémité, d'une butée annulaire, appelée coupe-ciment, servant de coffrage pour le mortier de ciment.

Côté bout uni, la butée faisant office de coupe-ciment est un disque en caoutchouc qui est mis en place avant la coulée du mortier dans le tuyau, puis retiré après durcissement du mortier hydraulique.

Côté bout à emboîtement, la butée utilisée comme coupe-ciment est une bague annulaire en caoutchouc. Celle-ci est mise en place à la main avant coulée du mortier, puis retirée après prise du mortier de ciment.

Lors de l'enlèvement des coupe-ciments, il y a un risque d'arrachement d'une partie du mortier en contact avec le coupe-ciment. Ceci conduit à la nécessité d'apporter par la suite des retouches de mortier, voire de peinture si celle-ci a été abimée lors du nettoyage du tuyau en vue d'enlever les déchets de mortier.

Le tuyau connu est donc peu économique à fabriquer.

D'autres tuyaux sont connus par WO2014/079974.

L'invention a pour but de proposer un tuyau qui soit plus économique et plus facile à fabriquer tout en ayant un revêtement en mortier de ciment dont l'épaisseur est maîtrisée et qui ne nécessite pas de retouche après cimentation.

Un autre but de l'invention est de fournir un tuyau qui ait une protection efficace contre la corrosion, plus particulièrement au niveau de ses extrémités.

A cet effet, l'invention a pour objet un tuyau tel que défini par la revendication 1.

Selon des modes de réalisation particuliers, le tuyau selon l'invention peut avoir l'une ou plusieurs des caractéristiques suivantes, prise(s) dans toutes les combinaisons techniquement possibles :
- le tuyau comprend une seconde barrière annulaire adaptée pour s'opposer à un écoulement axial du mortier de ciment à l'état non-solide et dans lequel la seconde barrière est disposée à la seconde extrémité axiale du fût,
- la première barrière, le cas échéant et/ou la seconde barrière, est
- en matière synthétique, notamment en matière élastomère et en particulier en copolymère EPDM (éthylène - propylène - diène), ou en un matériau thermoplastique, notamment en PP (polypropylène), en PE (polyéthylène), en PET (polyéthylène téréphtalate) amorphe ou en copolymère PE/acrylique, ou
- en un métal anticorrosion, notamment à base de zinc (Zn), ou
- en une colle thermofusible, ou
- en acier, et dans lequel de préférence la première barrière, le cas échéant et/ou la seconde barrière, est en une matière alimentaire.
- le bout uni est défini par la seconde extrémité axiale du fût, dans lequel
   la partie d'emboîtement du corps de base a une surface extérieure d'emboîtement et une surface frontale d'emboîtement, et dans lequel
   la partie d'emboîtement est disposée du côté de la première extrémité axiale du fût et est reliée à cette extrémité axiale.
- la première barrière se trouve axialement dans la partie d'emboîtement du corps de base ou dans lequel la première barrière se trouve axialement dans le fût.
- le revêtement d'emboîtement est venu de matière avec la première barrière ou dans lequel la première barrière est disposée sur le revêtement d'emboîtement.
- la partie d'emboîtement comprend un fond d'emboîtement, dans lequel le tuyau comprend un organe de protection du fond d'emboîtement et dans lequel la première barrière est formée par l'organe de protection.
- le revêtement d'emboîtement s'étend sur la surface frontale d'emboîtement et sur la surface extérieure d'emboîtement.
- le tuyau comprend un revêtement de bout uni s'étendant sur la surface extérieure de fût et sur la surface frontale de fût au niveau du bout uni, et dans lequel le revêtement de bout uni est relié à la seconde barrière, notamment le revêtement de bout uni est venu de matière avec la seconde barrière ou la seconde barrière est disposée sur le revêtement de bout uni.
- le corps de base comprend une couche de base anticorrosion formant la surface extérieure de fût, et le cas échéant la surface extérieure d'emboîtement,
   notamment dans lequel la couche de base anticorrosion contient du zinc (Zn) et de préférence est formée d'un alliage de zinc (Zn), d'aluminium (AI) et de cuivre (Cu), et dans lequel
   le tuyau comprend une couche de couverture disposée au moins sur la couche de base anticorrosion,
   le cas échéant le revêtement d'emboîtement s'étendant sur la couche de base anticorrosion et la couche de couverture s'étendant sur le revêtement d'emboîtement disposé sur la surface extérieure d'emboîtement.
- le revêtement de bout uni s'étend sur la couche de base anticorrosion.

L'invention a en outre pour objet une jonction tubulaire comprenant un premier tuyau et un second tuyau, dans lequel le premier tuyau et le second tuyau sont reliés l'un à l'autre de manière étanche à l'eau et dans lequel au moins l'un des deux tuyaux est un tuyau tel que défini ci-dessus.

L'invention a en outre pour objet un procédé de fabrication d'un tuyau tel que défini ci-dessus, comprenant les étapes successives suivantes :
- fourniture du corps de base,
- application du revêtement d'emboîtement et du revêtement de bout uni sur le corps de base,
- application de la première barrière sur le corps de base,
- le cas échéant, application de la seconde barrière sur le corps de base,
- application du mortier de ciment à l'état non-solide sur la surface intérieure du fût,
- solidification du mortier de ciment en obtenant le revêtement de mortier de ciment et
- application de la couche de couverture.

L'invention sera mieux comprise à la lecture de la description qui va suivre, donnée uniquement à titre d'exemple et faite en se référant aux dessins annexés, sur lesquels :
**[****Fig 1****]** La Figure 1 est une vue en coupe longitudinale d'un premier mode de réalisation d'un tuyau selon l'invention ;
**[****Fig 2****]** La Figure 2 est une vue agrandie du détail II de la Figure 1 ;
**[****Fig 3****]** La Figure 3 est une vue en coupe d'un détail d'une variante du tuyau de la Figure 1 ;
**[****Fig 4****]** La Figure 4 est une vue en coupe longitudinale d'un deuxième mode de réalisation d'un tuyau selon l'invention ;
**[****Fig 5****]** La Figure 5 est une vue agrandie du détail V de la Figure 4 ;
**[****Fig 6****]** La Figure 6 est une vue en coupe longitudinale d'un troisième mode de réalisation d'un tuyau selon l'invention ;
**[****Fig 7****]** La Figure 7 est une vue agrandie d'un détail VII de la Figure 6 ; et
**[****Fig 8****]** La Figure 8 est une vue schématique d'une jonction tubulaire selon l'invention.

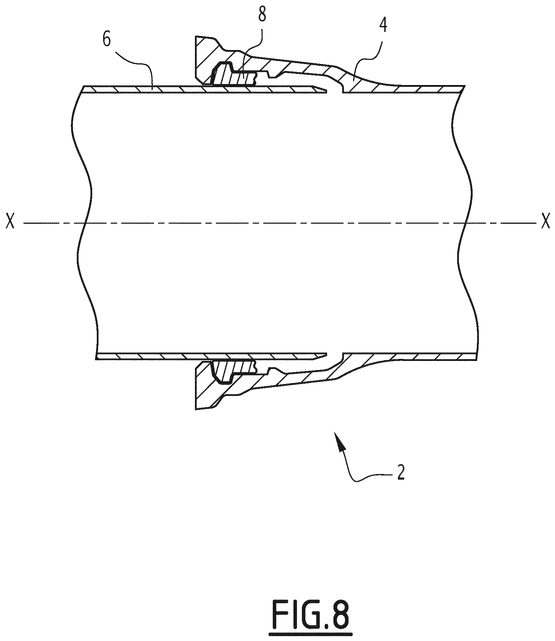

Sur la Figure 8 est représentée d'une manière schématique une jonction tubulaire selon l'invention, désignée par la référence générale 2. La jonction tubulaire 2 comprend un premier tuyau 4, un second tuyau 6 et une garniture d'étanchéité 8 intercalée entre le premier tuyau 4 et le second tuyau 6 et rendant étanche un interstice subsistant entre les premier et second tuyaux 4 et 6.

Par la suite on décrira un tuyau 10 selon l'invention qui peut former le premier tuyau 4 et/ou le second tuyau 6 de la jonction tubulaire 2.

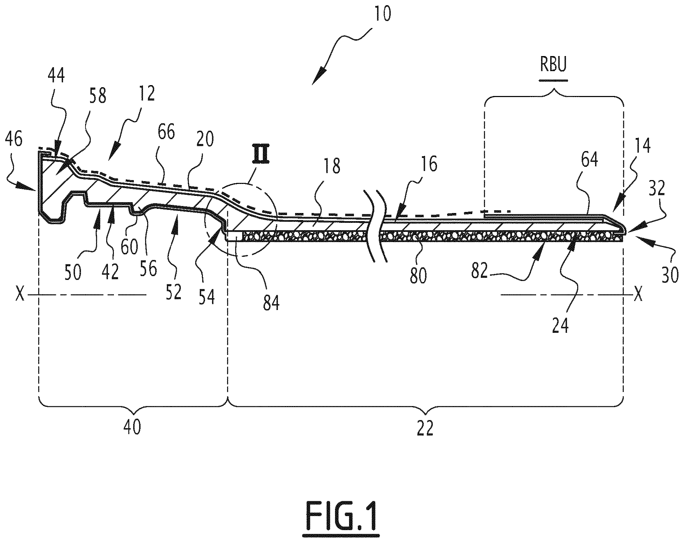

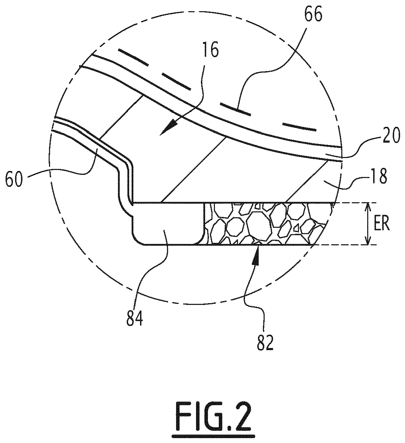

Sur la Figure 1 est représentée une vue en coupe d'un premier mode de réalisation du tuyau 10 selon l'invention. La Figure 2 montre un détail de ce tuyau 10.

Le tuyau 10 est de forme généralement de révolution autour d'un axe central X-X. Dans ce qui suit, les expressions « axialement », « radialement » et « circonférentiellement » seront utilisées par rapport à cet axe central X-X. Les termes « extérieures » et « intérieures » sont également utilisés par rapport à cet axe central X-X. Le terme « épaisseur » est généralement utilisé selon une direction radiale ou selon une direction perpendiculaire à la surface de l'objet dont l'épaisseur est indiquée.

Le tuyau 10 comprend un bout à emboîtement 12 et un bout uni 14.

Le tuyau 10 comprend un corps de base 16 qui est composé d'un corps de support ou âme 18 en fonte, notamment en fonte à graphite sphéroïdal, et d'une couche de base 20 anticorrosion.

En variante, le corps de support 18 est en un métal ou en un alliage autre que de la fonte.

La couche de base 20 anticorrosion est par exemple une couche métallique à base de zinc (Zn), notamment en un alliage de zinc et d'aluminium, éventuellement enrichi en cuivre. En variante, la couche de base 20 anticorrosion est en une matière autre ou en un métal ou en un alliage autre qu'un métal ou un alliage à base de zinc. La couche de base 20 est par exemple une couche poreuse et a par exemple une densité surfacique de 400g/m2. Elle est obtenue par projection sur la surface extérieure du corps de support 18.

En variante encore, le corps de base 16 est en une seule matière, par exemple en fonte, sans couche de base 20 anticorrosion.

Le corps de base 16 a une forme de révolution autour de l'axe central X-X.

Le corps de base 16 comporte un fût 22 sensiblement cylindrique ayant une surface intérieure de fût 24, une surface extérieure de fût 26, une première extrémité axiale de fût 28 et une seconde extrémité axiale de fût 30. La seconde extrémité axiale de fût 30 forme une surface frontale 32 du fût.

Le bout uni 14 est défini par la seconde extrémité axiale 30 du fût.

Le corps de base 16 comporte une partie d'emboîtement 40 ayant une surface intérieure d'emboîtement 42, une surface extérieure d'emboîtement 44 et une surface frontale d'emboîtement 46. Le bout à emboîtement 12 est défini par cette partie d'emboîtement 40. La partie d'emboîtement 40 est disposée du côté de la première extrémité axiale de fût 28 et est reliée à cette extrémité axiale de fût 28.

La partie d'emboîtement 40 comprend une gorge d'emboîtement 50, une gorge de fond 52 et un fond d'emboîtement 54. La gorge de fond 52 et la gorge d'emboîtement 50 sont séparées par une nervure intermédiaire 56. La première extrémité axiale de fût 28 coïncide avec le fond d'emboîtement 54.

La partie d'emboîtement 40 peut être munie d'une collerette d'emboîtement 58 extérieure.

Le tuyau 10 est muni d'un revêtement de protection d'emboîtement 60 s'étendant sur la surface intérieure d'emboîtement 42. Le revêtement d'emboîtement 60 s'étend sur la surface frontale d'emboîtement 46 et sur une partie de la surface extérieure d'emboîtement 44 de manière à protéger ces surfaces contre la corrosion et contre les dommages pouvant résulter de chocs lors du transport, du stockage ou de la pose du tuyau, plus particulièrement au niveau des arêtes du tuyau qui sont davantage exposées aux chocs et aux phénomènes de corrosion pouvant en résulter.

Le revêtement d'emboîtement 60 est par exemple en matière synthétique, notamment en matériau thermoplastique et plus particulièrement en PP (polypropylène), en PE (polyéthylène), en PET (polyéthylène téréphtalate) amorphe ou à base d'un copolymère PE/acrylique.

De préférence, l'épaisseur du revêtement d'emboîtement 60 est identique sur toute son étendue, et en particulier sur toute l'étendue de la surface intérieure d'emboîtement 42. L'épaisseur du revêtement d'emboîtement 60 est de préférence également identique sur la surface frontale d'emboîtement 46 et sur la partie de la surface extérieure d'emboîtement 44.

En l'occurrence, la couche de base 20 anticorrosion forme la surface extérieure de fût 26 et la surface extérieure d'emboîtement 44.

Le tuyau 10 comprend un revêtement de protection de bout uni 64 s'étendant sur une partie de la surface extérieure de fût 26 et sur la surface frontale de fût 32 au niveau du bout uni, protégeant ainsi ces surfaces contre la corrosion et contre les dommages pouvant résulter de chocs à ces emplacements lors du transport, du stockage ou de la pose du tuyau. Le revêtement de bout uni 64 s'étend donc sur la couche de base 20 anticorrosion. Avantageusement, l'étendue axiale RBU du revêtement de bout uni 64 sur la surface extérieure de fût 26, mesurée depuis la surface frontale 32, est au moins égale à l'étendue axiale de la gorge de fond 52 ou alternativement du bout à emboîtement 40. Ainsi, lorsque le bout uni 14 est inséré à fond dans le bout à emboîtement 12 d'un tuyau du même type, le revêtement de bout uni 64 protège la surface extérieure du fût 22 située derrière la garniture d'étanchéité de tout contact avec des eaux agressives potentiellement transportées par les tuyaux.

En variante non représentée, l'extension du revêtement de bout uni 64 sur la surface extérieure de fût peut se limiter à l'extrémité chanfreinée ou biseautée du bout uni, notamment lorsque les tuyaux transportent de d'eau potable.

Avantageusement, le revêtement de bout uni 64 est en la même matière que le revêtement d'emboîtement 60.

Le revêtement de bout uni 64 s'étend sur la surface intérieure de fût 24, depuis la seconde extrémité axiale de fût 30 sur une distance axiale comprise entre 2mm et 10mm. Le revêtement de bout uni 64 entoure, de préférence complètement, la seconde extrémité axiale de fût 30 et s'étend donc depuis la surface intérieure de fût 24 vers la surface extérieure de fût 26.

Le revêtement de bout uni 64 s'étend sur une partie de la surface intérieure de fût 24 et est donc recouvert du revêtement de mortier de ciment 80 (voir ci-après).

De préférence, le revêtement d'emboîtement 60 et/ou le revêtement de bout uni 64 est en une matière apte au contact avec de l'eau destinée à la consommation humaine. Ainsi, le tuyau est utilisable pour le transport d'eau potable.]

De préférence, le revêtement d'emboîtement 60 et/ou le revêtement de bout uni 64 est un revêtement à base d'un copolymère PE/acrylique appliqué par poudrage sur la surface intérieure, la surface frontale et le rebord extérieur du bout à emboîtement, ainsi que sur la surface extérieure, le chanfrein et le rebord intérieur du bout uni.

Alternativement, le revêtement d'emboîtement 60 et/ou le revêtement de bout uni 64 est en un métal ou un alliage anticorrosion, notamment à base de zinc (Zn), recouvert d'une peinture bouche-pores.

Le tuyau 10 est muni d'une couche de couverture 66 disposée au moins sur la couche de base 20. En l'occurrence, la couche de couverture 66 s'étend sur la couche de base 20, et est donc en contact avec celle-ci aux emplacements qui ne sont pas recouverts par le revêtement de bout uni 64 et qui ne sont pas recouverts par le revêtement d'emboîtement 60.

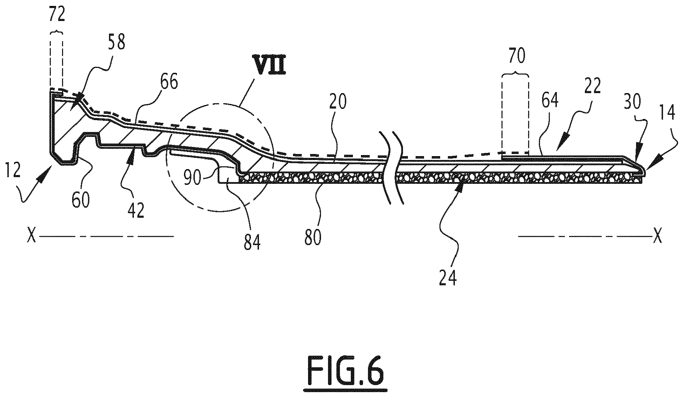

La couche de couverture 66 s'étend également sur le revêtement d'emboîtement 60 qui recouvre la surface extérieure d'emboîtement 44, ainsi que sur tout ou partie du revêtement de bout uni 64 qui recouvre la surface extérieure de fût 26, par exemple sur une partie de recouvrement 70 (représentée sur la Figure 6 pour plus de lisibilité).

La couche de couverture 66 est par exemple une couche poreuse apte à boucher les pores de la couche de base 20 et disposée sur la couche de base 20 ainsi que sur les parties du revêtement de bout uni 64 et du revêtement d'emboîtement 60 comme décrit ci-dessus. La couche de couverture 66 est de préférence à base d'une peinture monocomposante en phase aqueuse, telle que celles décrites dans le document WO2014/001544 (EP 2867382), notamment lorsque la couche de base 20 anticorrosion est un alliage métallique à base de zinc.

De préférence, la couche de couverture est une peinture monocomposante en phase aqueuse à base d'au moins une résine de synthèse émulsionnée, dispersée ou dissoute dans l'eau. La résine de synthèse est formulée de préférence à partir d'au moins un polymère ou au moins un copolymère pris dans la liste consistant en les polymères ou copolymères acryliques, styrène acrylique, halogénures de vinyle tels que chlorure de vinyle, chlorure de vinyle acrylate, halogénures de vinylidène tels que chlorure de vinylidène, vinyliques, méthacryliques, acétate polyvinylique, et leurs mélanges.

Préférentiellement, la peinture monocomposante est une peinture aqueuse d'une résine à base d'un copolymère acrylique-PVDC (Polychlorure de vinylidène) en émulsion dans l'eau.

Le revêtement d'emboîtement 60 s'étend depuis la surface frontale d'emboîtement 46 sur la couche de base 20 anticorrosion sur une partie de recouvrement 72, représentée sur la Figure 6 pour davantage de lisibilité. La couche de couverture 66 s'étend sur le revêtement d'emboîtement 60 disposé sur cette partie de recouvrement 72 et ceci de préférence jusqu'à la surface frontale d'emboîtement 46.

De préférence, la surface extérieure du tuyau 10 est constituée par le revêtement de bout uni 64 et la couche de couverture 66, ainsi que, le cas échéant, par le revêtement d'emboîtement 60.

Le tuyau 10 est muni d'un revêtement de mortier de ciment 80 disposé sur la surface intérieure de fût 24 et ayant une épaisseur radiale de revêtement ER. Le revêtement de mortier de ciment 80 est par exemple à base de ciment au laitier de haut fourneau, de charges (sable) et d'eau. Sur toute sa longueur axiale, le revêtement de mortier de ciment 80 a une surface intérieure de mortier de ciment 82 essentiellement cylindrique d'axe X-X. Le revêtement de mortier de ciment 80 est obtenu par centrifugation.

Le tuyau 10 comprend une première barrière 84 annulaire adaptée pour s'opposer à un écoulement ou déplacement axial du mortier de ciment à l'état non-solide, c'est-à-dire à un état liquide, semi-liquide ou pâteux lors de la fabrication du revêtement de mortier de ciment par centrifugation.

La première barrière 84 est disposée à la première extrémité axiale de fût 28 et délimite l'espace du revêtement de mortier de ciment 80 du côté bout à emboîtement. La première barrière 84 a une surface intérieure annulaire qui a un diamètre intérieur identique ou essentiellement identique au diamètre de la surface intérieure de mortier de ciment 82. La première barrière 84 définit ainsi l'épaisseur radiale ER du revêtement de mortier de ciment 80.

Avantageusement, la première barrière 84 est en contact avec le revêtement d'emboîtement 60.

Dans le mode de réalisation du tuyau 10 des Figures 1 et 2, la première barrière 84 se trouve axialement dans le fût 22. En d'autres termes, la première barrière 84 chevauche ou recouvre axialement le fût 22.

La première barrière 84 a par exemple une étendue axiale comprise entre 2mm et 20mm. La première barrière 84 a par exemple une section radiale de rectangle, éventuellement à coins arrondis ou biaisés.

Le revêtement d'emboîtement 60 est relié à la première barrière 84. De préférence, le revêtement d'emboîtement 60 est solidaire de ou est venu de matière avec la première barrière 84. Le revêtement d'emboîtement 60 est fixé, notamment à demeure, à la première barrière 84.

Grâce à la liaison entre le revêtement d'emboîtement 60 et la première barrière 84, l'interface entre le revêtement de mortier de ciment 80 et le revêtement d'emboîtement est étanche et le risque d'amorces de corrosion est faible.

La première barrière 84 est avantageusement en une matière identique à celle du revêtement d'emboîtement 60, notamment en matériau thermoplastique, et plus particulièrement en PP (polypropylène), en PE (polyéthylène), en PET (polyéthylène téréphtalate) amorphe ou à base d'un copolymère PE/acrylique.

La première barrière 84 peut être en une matière différente de la matière du revêtement d'emboîtement 60.

Le tuyau 10 peut comprendre une seconde barrière annulaire, non représentée sur les figures et adaptée pour s'opposer à un écoulement ou déplacement axial du mortier de ciment à l'état non-solide, c'est-à-dire à un état liquide, semi-liquide ou pâteux lors de la fabrication du revêtement de mortier de ciment par centrifugation. La seconde barrière est disposée à la seconde extrémité axiale de fût 30 et délimite l'espace du revêtement de mortier de ciment 80 du côté bout uni. La seconde barrière a une surface intérieure annulaire qui a un diamètre intérieur identique ou essentiellement identique au diamètre de la surface intérieure de mortier de ciment 82, définissant ainsi l'épaisseur radiale ER du revêtement de mortier de ciment 80.

La seconde barrière est par exemple disposée axialement dans le fût 22. Avantageusement la seconde barrière est en contact avec le revêtement de bout uni 64, ce dernier étant relié à seconde barrière. De préférence, le revêtement de bout uni 64 est solidaire de ou est venu de matière avec la seconde barrière.

La seconde barrière peut être en une matière différente de la matière du revêtement de bout uni 64.

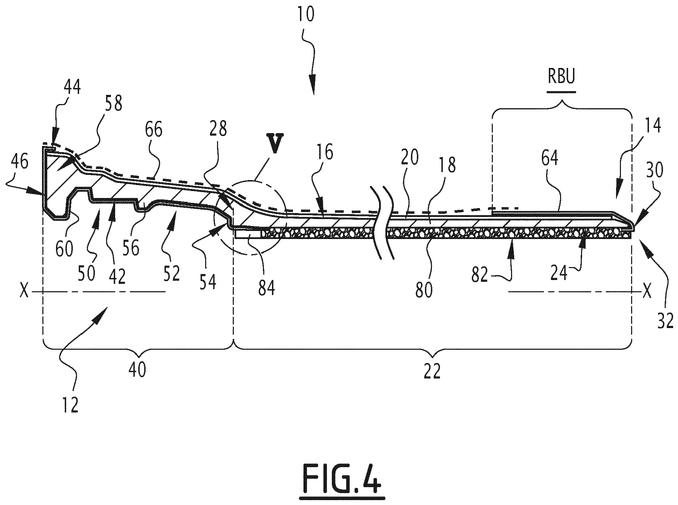

Au cas où le tuyau dispose d'une seconde barrière, elle peut être fixée au revêtement 64 de la Figure 6 ou être venue de matière avec le revêtement 64 de la Figure 6 et s'étendrait au niveau de l'extrémité axiale du revêtement de mortier de ciment 80 côté bout uni. En ce qui concerne le second mode de réalisation du tuyau, sur la Fig. 4 la seconde barrière viendrait par exemple s'appuyer contre la portion de revêtement 64 rabattue sur la surface intérieure du fût.

La seconde barrière est avantageusement en une matière identique à celle du revêtement de bout uni 64, notamment en matière thermoplastique et plus particulièrement en PP (polypropylène), en PE (polyéthylène), en PET (polyéthylène téréphtalate) amorphe ou à base d'un copolymère PE/acrylique.

De manière avantageuse, la première barrière 84 et/ou la seconde barrière est en une matière apte au contact avec l'eau destinée à la consommation humaine, rendant ainsi le tuyau utilisable pour le transport d'eau potable.

De préférence la première barrière 84 et/ou la seconde barrière sont à base d'un copolymère PE/acrylique et sont venus de matière respectivement avec le revêtement de protection d'emboîtement 60 et avec le revêtement de protection de bout uni 64.

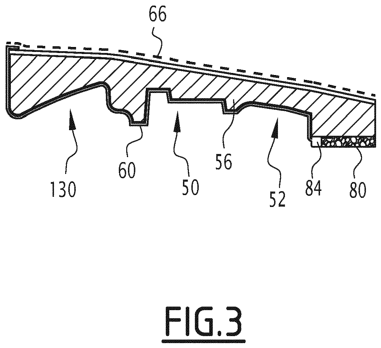

Sur la figure 3 est montré un détail d'une variante du tuyau de la Figure 1. Le tuyau 10 ne comporte pas de collerette d'emboîtement 58.

Le bout à emboîtement du tuyau 10 comporte en outre une gorge de verrouillage 130 ayant une surface intérieure servant d'appui à un organe de verrouillage non représenté. Cette surface de verrouillage se rétrécit vers la surface frontale d'emboîtement 46.

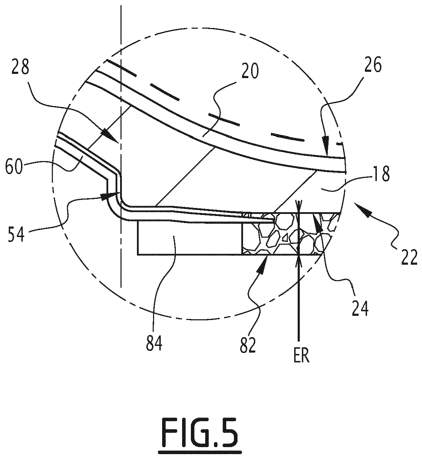

Sur les figures 4 et 5 est montré un deuxième mode de réalisation d'un tuyau selon l'invention.

Ce tuyau diffère de celui précédemment décrit uniquement par ce qui suit. Les éléments analogues portent les mêmes références.

La première barrière 84 annulaire est disposée à la première extrémité axiale de fût 28 et est avantageusement disposée à l'intérieur du fût 22. En l'occurrence, la première barrière est disposée sur une portion du revêtement d'emboîtement 60 s'étendant sur la surface intérieure 24 du fût. La première barrière 84 est en contact avec le revêtement d'emboîtement 60 mais n'est ni solidaire ni venue de matière avec celui-ci. De plus, comme pour le mode de réalisation précédemment décrit, la première barrière 84 demeure en place dans le fût 22 après mise en place du revêtement de mortier de ciment.

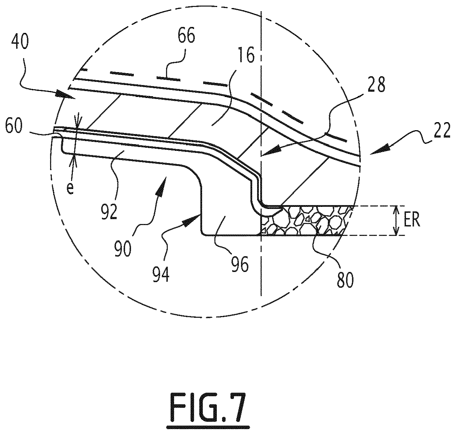

Alternativement, et d'une manière non représentée, la première barrière 84 est disposée dans la gorge de fond 52 de l'emboîtement, en contact avec la surface frontale de la première extrémité axiale de fût 28 et avec le revêtement d'emboîtement 60. Dans ce cas, le revêtement d'emboîtement 60 s'étend jusqu'à la première extrémité axiale de fût 28. Cette alternative est similaire au mode de réalisation de la Figure 7, mais ne comporte pas de jupe 92 (voir ci-après).

Comme pour le premier mode de réalisation, le tuyau 10 peut comprendre une seconde barrière disposée à la seconde extrémité axiale de fût 30. Cette seconde barrière est de préférence en contact avec le revêtement de bout uni 64 mais n'est ni solidaire, ni venue de matière avec celui-ci. La seconde barrière demeure là-encore en place après mise en place du revêtement de mortier de ciment.

La première barrière 84 et/ou la seconde barrière des Figures 4 et 5 est par exemple en matière synthétique, notamment en matière élastomère comme par exemple un copolymère EPDM (éthylène - propylène - diène), ou en un matériau thermoplastique tel que du PP (polypropylène), du PE (polyéthylène), du PET (polyéthylène téréphtalate) amorphe, ou un copolymère PE/acrylique. De préférence la première barrière 84 et/ou la seconde barrière sont à base d'un copolymère PE/acrylique.

De préférence, la première barrière 84 et/ou la seconde barrière est en une matière apte au contact avec de l'eau destinée à la consommation humaine, rendant ainsi le tuyau utilisable pour le transport d'eau potable.

Alternativement, la première barrière 84 et/ou la seconde barrière est en un métal ou un alliage anticorrosion, notamment à base de zinc (Zn).

Encore alternativement, la première barrière 84 et/ou la seconde barrière est en une colle thermofusible ou en acier.

Sur les Figures 6 et 7 est montré un troisième mode de réalisation d'un tuyau selon l'invention. Ce tuyau diffère du mode de réalisation précédemment décrit uniquement par ce qui suit, les éléments analogues portant les mêmes références.

Le tuyau 10 comprend un organe de protection 90 du fond d'emboîtement 54. Cet organe de protection 90 est similaire à l'organe de protection 26 décrit dans le document WO2014/79974 en référence aux Figures 3 et 4. Il est donc expressément fait référence aux caractéristiques de cet organe de protection 26 de WO2014/79974 et elles sont incorporées par référence dans le présent texte.

L'organe de protection est muni d'une jupe 92, notamment ayant une épaisseur e, qui est sensiblement constante sur toute l'étendue axiale de la jupe 92. L'épaisseur e est mesurée perpendiculairement aux surfaces de la jupe 92.

L'organe de protection 90 comporte une butée axiale de fond 94 qui est formée par une nervure de butée 96 venant en appui contre le fond d'emboîtement 54. La butée axiale de fond 94 est adaptée pour entrer en contact avec un bout uni, qui est un bout uni identique ou similaire au bout uni 14 du tuyau 10, inséré dans le bout à emboîtement et pour limiter la course de ce bout uni par rapport au bout à emboîtement.

La première barrière 84 se trouve axialement dans la partie d'emboîtement 40 du corps de base (Figures 6 et 7). La première barrière 84 est formée par la nervure de butée 96 et donc par l'organe de protection 90. La première barrière 84 est en contact avec le revêtement d'emboîtement 60 mais n'est ni solidaire ni venue de matière avec celui-ci. De plus, comme pour les modes de réalisation précédents, la première barrière 84 demeure en place dans le fût 22 après mise en place du revêtement de mortier de ciment.

La nervure de butée 96 s'étend radialement vers l'intérieur et définit une surface intérieure libre cylindrique à section circulaire. Cette surface intérieure libre affleure la surface intérieure 82 du revêtement de mortier de ciment.

Le tuyau 10 selon l'invention est fabriqué en mettant en oeuvre les étapes suivantes :
- Tout d'abord, le corps de base 16 est fourni.
- Ensuite, le revêtement d'emboîtement 60 et le revêtement de bout uni 64 sont appliqués.

Puis, la première barrière 84 est appliquée sur le corps de base 16.

Cette étape d'application est par exemple effectuée en déposant par extrusion la quantité nécessaire de matière synthétique à l'entrée du fût ou par toute autre méthode adaptée pour donner à la première barrière la forme finale d'anneau souhaitée.
- Le cas échéant la seconde barrière est appliquée sur le corps de base, par exemple par extrusion ou par toute autre méthode de conformation adaptée.
- Ensuite, le mortier de ciment à l'état non-solide est appliqué sur la surface intérieure 24 du fût du corps de base 16, pendant que le corps de base est entrainé en rotation autour de l'axe central X-X. La quantité de mortier de ciment déposée correspond au volume nécessaire pour que la surface intérieure du revêtement de mortier de ciment 80 affleure la surface intérieure de la première et/ou de la seconde barrière.
- Puis on laisse solidifier le mortier de ciment appliqué en obtenant le revêtement de mortier de ciment 80.
- La couche de couverture 66 est alors appliquée sur le tuyau 10.
- Enfin, le tuyau 10 obtenu est utilisé pour former une jonction tubulaire 2, la première barrière et/ou la seconde barrière étant fixée(s) et restant fixée(s) au corps de base et au revêtement de mortier de ciment 80 dans la jonction tubulaire 2.

Alternativement, selon une variante non représentée, le revêtement d'emboîtement 60 est en métal anticorrosion revêtu d'une couche d'un matériau synthétique formant bouche-pores.

Alternativement, selon une variante non représentée, le revêtement de bout uni 64 est en métal anticorrosion revêtu d'une couche d'un matériau synthétique formant bouche-pores.

Le tuyau 10 selon l'invention permet l'obtention d'une couche de mortier de ciment déterminée dont la surface intérieure affleure la surface intérieure des barrières, assurant ainsi la continuité de l'écoulement du fluide circulant dans les tuyaux assemblés.

## Revendications

1. Tuyau, du type comprenant
un corps de base (16), ayant un axe central (X-X) et formant un fût (22) cylindrique,
le fût ayant une surface intérieure de fût (24), une surface extérieure de fût (26), une première extrémité axiale (28) et une seconde extrémité axiale (30),
la seconde extrémité axiale (30) du fût formant une surface frontale de fût (32),
le tuyau comprenant
- un revêtement de mortier de ciment (80) disposé sur la surface intérieure de fût et ayant une épaisseur radiale de revêtement (ER),
- une première barrière (84) annulaire disposée à la première extrémité axiale (28) du fût et adaptée pour s'opposer à un écoulement axial du mortier de ciment à l'état non-solide, et
- un bout à emboîtement (12) et un bout uni (14),
le bout à emboîtement étant défini par une partie d'emboîtement (40) du corps de base qui comprend une surface intérieure d'emboîtement (42),
le corps de base (16) comprenant un corps de support (18) en métal ou en un alliage, **caractérisé en ce que**
le tuyau comprend un revêtement d'emboîtement (60) s'étendant sur la surface intérieure d'emboîtement, et **en ce que**
le revêtement d'emboîtement (60) est relié à la première barrière, **en ce que** la première barrière (84) a une surface intérieure annulaire qui a un diamètre intérieur identique ou essentiellement identique au diamètre de la surface intérieure du mortier de ciment (82).

2. Tuyau selon la revendication 1, dans lequel le tuyau (10) comprend une seconde barrière annulaire adaptée pour s'opposer à un écoulement axial du mortier de ciment à l'état non-solide et dans lequel
la seconde barrière est disposée à la seconde extrémité axiale (30) du fût.

3. Tuyau selon la revendication 1 ou 2, dans lequel
la première barrière (84), le cas échéant et/ou la seconde barrière, est
- en matière synthétique, notamment en matière élastomère et en particulier en copolymère EPDM (éthylène - propylène - diène), ou en un matériau thermoplastique, notamment en PP (polypropylène), en PE (polyéthylène), en PET (polyéthylène téréphtalate) amorphe ou en copolymère PE/acrylique, ou
- en un métal anticorrosion, notamment à base de zinc (Zn), ou
- en une colle thermofusible, ou
- en acier, et dans lequel
de préférence la première barrière (84), le cas échéant et/ou la seconde barrière, est en une matière alimentaire.

4. Tuyau selon l'une quelconque des revendications précédentes, dans lequel le bout uni est défini par la seconde extrémité axiale du fût, dans lequel
la partie d'emboîtement (40) du corps de base a une surface extérieure d'emboîtement (44) et une surface frontale d'emboîtement (46), et dans lequel
la partie d'emboîtement est disposée du côté de la première extrémité axiale (28) du fût et est reliée à cette extrémité axiale.

5. Tuyau selon l'une quelconque des revendications précédentes, dans lequel la première barrière se trouve axialement dans la partie d'emboîtement du corps de base ou dans lequel la première barrière se trouve axialement dans le fût.

6. Tuyau selon l'une quelconque des revendications précédentes, dans lequel le revêtement d'emboîtement est venu de matière avec la première barrière ou dans lequel la première barrière est disposée sur le revêtement d'emboîtement.

7. Tuyau selon l'une quelconque des revendications précédentes, dans lequel
la partie d'emboîtement (40) comprend un fond d'emboîtement (54), dans lequel
le tuyau comprend un organe de protection (90) du fond d'emboîtement et dans lequel la première barrière est formée par l'organe de protection.

8. Tuyau selon l'une quelconque des revendications 4 à 7, dans lequel le revêtement d'emboîtement (60) s'étend sur la surface frontale d'emboîtement (46) et sur la surface extérieure d'emboîtement (44).

9. Tuyau selon l'une quelconque des revendications précédentes, dans lequel
le tuyau comprend un revêtement de bout uni (64) s'étendant sur la surface extérieure de fût (26) et sur la surface frontale de fût (32) au niveau du bout uni, et dans lequel le revêtement de bout uni est relié à la seconde barrière, notamment le revêtement de bout uni est venu de matière avec la seconde barrière ou la seconde barrière est disposée sur le revêtement de bout uni (64).

10. Tuyau selon l'une quelconque des revendications précédentes, dans lequel
le corps de base comprend une couche de base (20) anticorrosion formant la surface extérieure de fût, et le cas échéant la surface extérieure d'emboîtement,
notamment dans lequel la couche de base (20) anticorrosion contient du zinc (Zn) et de préférence est formée d'un alliage de zinc (Zn), d'aluminium (AI) et de cuivre (Cu), et dans lequel
le tuyau (10) comprend une couche de couverture (66) disposée au moins sur la couche de base (20) anticorrosion,
le cas échéant le revêtement d'emboîtement (60) s'étendant sur la couche de base anticorrosion (20) et la couche de couverture (66) s'étendant sur le revêtement d'emboîtement disposé sur la surface extérieure d'emboîtement.

11. Tuyau selon la revendication 10, dans lequel le revêtement de bout uni (64) s'étend sur la couche de base (20) anticorrosion.

12. Jonction tubulaire (2) comprenant un premier tuyau (4) et un second tuyau (6), dans lequel le premier tuyau et le second tuyau sont reliés l'un à l'autre de manière étanche à l'eau et dans lequel au moins l'un des deux tuyaux est un tuyau selon l'une quelconque des revendications 1 à 11.

13. Procédé de fabrication d'un tuyau selon l'une quelconque des revendications 1 à 11, comprenant les étapes successives suivantes :
- fourniture du corps de base (16),
- application du revêtement d'emboîtement (60) et du revêtement de bout uni (64) sur le corps de base (16),
- application de la première barrière (84) sur le corps de base (16),
- le cas échéant, application de la seconde barrière sur le corps de base,
- application du mortier de ciment à l'état non-solide sur la surface intérieure du fût,
- solidification du mortier de ciment en obtenant le revêtement de mortier de ciment (80) et
- application de la couche de couverture (66).

## Patentansprüche

1. Rohr, einer Art, die Folgendes umfasst
einen Grundkörper (16), der eine Mittelachse (X-X) aufweist und einen zylindrischen Schaft (22) bildet,
wobei der Schaft eine Schaftinnenfläche (24), eine Schaftaußenfläche (26), ein erstes axiales Ende (28) und ein zweites axiales Ende (30) aufweist,
das zweite axiale Ende (30) des Schafts eine Schaftstirnfläche (32) bildet,
das Rohr umfassend
- eine Zementmörtelbeschichtung (80), die auf der inneren Schaftinnenfläche angeordnet ist und eine radiale Beschichtungsstärke (ER) aufweist,
- eine erste ringförmige Barriere (84), die an dem ersten axialen Ende (28) des Schafts angeordnet und angepasst ist, um einem axialen Fluss des Zementmörtels in nicht festem Zustand entgegenzuwirken, und
- ein Muffenende (12) und ein Zapfenende (14),
wobei das Muffenende durch einen Muffenabschnitt (40) des Grundkörpers definiert ist, der eine innere Muffenfläche (42) umfasst,
der Grundkörper (16) umfassend einen Stützkörper (18) aus Metall oder einer Legierung,
**dadurch gekennzeichnet, dass**
das Rohr eine Muffenbeschichtung (60) umfasst, die sich über die innere Muffenfläche erstreckt, und dadurch, dass
die Muffenbeschichtung (60) mit der ersten Barriere verbunden ist, dass die erste Barriere (84) eine ringförmige Innenfläche aufweist, die einen Innendurchmesser aufweist, der gleich oder im Wesentlichen wie der Durchmesser der Innenfläche des Zementmörtels (82) ist.

2. Rohr nach Anspruch 1, wobei das Rohr (10) eine zweite ringförmige Barriere umfasst, die angepasst ist, um einem axialen Fluss von Zementmörtel in nicht festem Zustand entgegenzuwirken, und wobei
die zweite Barriere an dem zweiten axialen Ende (30) des Schafts angeordnet ist.

3. Rohr nach Anspruch 1 oder 2, wobei:
die erste Barriere (84), gegebenenfalls und/oder die zweite Barriere, ist
- aus Kunststoff ist, insbesondere aus Elastomermaterial und insbesondere aus EPDM-Copolymer (Ethylen-Propylen-Dien), oder aus einem synthetischen Material, oder aus einem thermoplastischen Material, insbesondere aus PP (Polypropylen), PE (Polyethylen), amorphem PET (Polyethylenterephthalat) oder aus PE/Acryl-Copolymer, oder
- aus einem korrosionsbeständigen Metall, insbesondere auf Basis von Zink (Zn), oder
- aus einem Heißkleber oder
- aus Stahl, und wobei
vorzugsweise die erste Barriere (84), wenn vorhanden und/oder die zweite Barriere, aus einem lebensmittelechten Material ist.

4. Rohr nach einem der vorherigen Ansprüche, wobei das Zapfenende durch das zweite axiale Ende des Schafts definiert ist, wobei
der Muffenabschnitt (40) des Grundkörpers eine Muffenaußenfläche (44) und eine vordere Muffenstirnfläche (46) aufweist, und wobei
der Muffenabschnitt auf der Seite des ersten axialen Endes (28) des Schafts angeordnet ist und mit diesem axialen Ende verbunden ist.

5. Rohr nach einem der vorherigen Ansprüche, wobei sich die erste Barriere axial in dem Muffenabschnitt des Grundkörpers befindet, oder wobei sich die erste Barriere axial in dem Schaft befindet.

6. Rohr nach einem der vorherigen Ansprüche, wobei die Muffenbeschichtung mit der ersten Barriere einstückig ist, oder wobei die erste Barriere auf der Muffenbeschichtung angeordnet ist.

7. Rohr nach einem der vorherigen Ansprüche, wobei
der Muffenabschnitt (40) einen Muffenboden (54) umfasst, wobei
das Rohr ein Schutzelement (90) des Muffenbodens umfasst, und wobei die erste Barriere durch das Schutzelement gebildet ist.

8. Rohr nach einem der Ansprüche 4 bis 7, wobei sich die Muffenbeschichtung (60) über die vordere Muffenfläche (46) und die Muffenaußenfläche (44) erstreckt.

9. Rohr nach einem der vorherigen Ansprüche, wobei
das Rohr eine Zapfenendebeschichtung (64) umfasst, die sich über die Schaftaußenfläche (26) und die Fassstirnfläche (32) auf Ebene des Zapfenendes erstreckt, und wobei die Zapfenendebeschichtung mit der ersten Barriere verbunden ist, insbesondere die Zapfenendebeschichtung einstückig mit der zweiten Barriere gebildet ist oder die zweite Barriere auf der Zapfenendebeschichtung (64) angeordnet ist.

10. Rohr nach einem der vorherigen Ansprüche, wobei
der Grundkörper eine korrosionsbeständige Grundschicht (20) umfasst, die die äußere Schaftaußenfläche und gegebenenfalls die Muffenaußenfläche bildet,
insbesondere wobei die korrosionsbeständige Grundschicht (20) Zink (Zn) enthält und vorzugsweise aus einer Legierung aus Zink (Zn), Aluminium (AI) und Kupfer (Cu) gebildet ist, und wobei
das Rohr (10) eine Deckschicht (66) umfasst, die zumindest auf der korrosionsbeständigen Grundschicht (20) angeordnet ist,
wobei sich die Muffenbeschichtung (60), gegebenenfalls über die korrosionsbeständige Grundschicht (20) erstreckt, und die Deckschicht (66) sich über die Muffenbeschichtung erstreckt, die auf der Muffenaußenfläche angeordnet ist.

11. Rohr nach Anspruch 10, wobei sich die Zapfenendebeschichtung (64) über die korrosionsbeständige Grundschicht (20) erstreckt.

12. Rohrverbindung (2), umfassend ein erstes Rohr (4) und ein zweites Rohr (6), wobei das erste Rohr und das zweite Rohr wasserdicht miteinander verbunden sind, und wobei mindestens eines der zwei Rohre ein Rohr nach einem der Ansprüche 1 bis 11 ist.

13. Verfahren zur Herstellung eines Rohrs nach einem der Ansprüche 1 bis 11, umfassend die folgenden aufeinanderfolgenden Schritte:
- Bereitstellen des Grundkörpers (16),
- Aufbringen der Muffenbeschichtung (60) und der Zapfenendebeschichtung (64) auf den Grundkörper (16),
- Aufbringen der ersten Barriere (84) auf den Grundkörper (16),
- gegebenenfalls Aufbringen der zweiten Barriere auf den Grundkörper,
- Aufbringen von Zementmörtel in nicht festem Zustand auf die Innenfläche des Schafts,
- Verfestigen des Zementmörtels unter Erlangen der Zementmörtelbeschichtung (80), und
- Aufbringen der Deckschicht (66).

## Claims

1. A pipe of the type comprising
a base body (16), having a central axis (X-X) and forming a cylindrical shaft (22),
the shaft having an inner shaft surface (24), an outer shaft surface (26), a first axial end (28) and a second axial end (30),
the second axial end (30) of the shaft forming a front shaft surface (32),
the pipe comprising
- a cement mortar coating (80) disposed on the inner shaft surface and having a radial coating thickness (ER),
- a first annular barrier (84) disposed at the first axial end (28) of the shaft and adapted to oppose axial flow of the cement mortar in a non-solid state, and
- a bell end (12) and a spigot end (14),
the bell end being defined by a bell part (40) of the base body which comprises an inner bell surface (42),
the base body (16) comprising a support body (18) made of metal or of an alloy,
**characterized in that**
the pipe comprises a bell coating (60), extending over the inner bell surface, and **in that**
the bell coating (60) is connected to the first barrier **in that**
the first barrier (84) has an annular inner surface that has an inner diameter that is the same or substantially the same as the diameter of the inner surface of cement mortar (82).

2. The pipe according to claim 1, wherein the pipe (10) comprises an annular second barrier adapted to oppose axial flow of the cement mortar in a non-solid state and wherein
the second barrier is disposed at the second axial end (30) of the shaft.

3. The pipe according to claim 1 or 2, wherein
the first barrier (84) and/or the second barrier, if any, is
- made of synthetic material, in particular of elastomeric material and in particular of EPDM (ethylene-propylene-diene) copolymer or of a thermoplastic material, in particular of PP (polypropylene), of PE (polyethylene), of amorphous PET (polyethylene terephthalate) or of PE/acrylic copolymer, or
- made of an anti-corrosion metal, in particular based on zinc (Zn), or
- made of a hot-melt adhesive, or
- made of steel, and wherein
preferably the first barrier (84) and/or the second barrier, if any, is made of a food safe material.

4. The pipe according to any of the preceding claims, wherein the spigot end is defined by the second axial end of the shaft, wherein
the bell part (40) of the base body has an outer bell surface (44) and a front bell surface (46), and wherein
the bell part is disposed on the side of the first axial end (28) of the shaft and connected to this axial end.

5. The pipe according to any of the preceding claims, wherein the first barrier is located axially within the bell part of the base body or wherein the first barrier is located axially within the shaft.

6. The pipe according to any one of the preceding claims, wherein the bell coating is made in one piece with the first barrier or wherein the first barrier is disposed on the bell coating.

7. The pipe according to any one of the preceding claims, wherein
the bell part (40) comprises a bell bottom (54), wherein
the pipe comprises a protective member (90) of the bell bottom and wherein the first barrier is formed by the protective member.

8. The pipe according to any one of claims 4 to 7, wherein the bell coating (60) extends over the front bell surface (46) and the outer bell surface (44).

9. The pipe according to any one of the preceding claims, wherein
the pipe comprises a spigot coating (64) extending over the shaft outer surface (26) and over the shaft front surface (32) at the spigot end, and wherein the spigot coating is connected to the second barrier, in particular the spigot coating is made in one piece with the second barrier or the second barrier is disposed over the spigot coating (64).

10. The pipe according to any one of the preceding claims, wherein
the base body comprises an anti-corrosion base layer (20) forming the outer shaft surface, and optionally the outer bell surface,
in particular wherein the anti-corrosion base layer (20) contains zinc (Zn) and is preferably formed from an alloy of zinc (Zn), aluminum (Al) and copper (Cu), and wherein
the pipe (10) comprises a cover layer (66) arranged at least on the anti-corrosion base layer (20),
the bell coating (60) optionally extending over the anti-corrosion base layer (20) and the cover layer (66) extending over the bell coating arranged on the outer bell surface.

11. The pipe according to claim 10, wherein the spigot coating (64) extends over the anti-corrosion base layer (20).

12. A tubular joint (2) comprising a first pipe (4) and a second pipe (6), wherein the first pipe and the second pipe are connected to each other in a watertight manner and wherein at least one of the two pipes is a pipe according to any of claims 1 to 11.

13. A method for manufacturing a pipe according to any one of claims 1 to 11, comprising the following successive steps:
- providing the base body (16),
- applying the bell coating (60) and the spigot coating (64) to the base body (16),
- applying the first barrier (84) to the base body (16),
- if necessary, applying the second barrier to the base body,
- applying the cement mortar in a non-solid state to the inner surface of the shaft,
- solidifying the cement mortar to obtain the cement mortar coating (80) and
- applying the cover layer (66).
